# EUROPÄISCHE PATENTSCHRIFT

(11) **EP 3 633 227 B1**
(45) Veröffentlichungstag und Bekanntmachung des Hinweises auf die Patenterteilung: **26.10.2022**
(21) Anmeldenummer: 19193893.5
(22) Anmeldetag: 27.08.2019
(51) Int. Cl.: F16F 1/26, B60G 11/12

(54) **FUGENABDECKELEMENT FÜR EINE BLATTFEDER**
JOINT COVER ELEMENT FOR A LEAF SPRING
ÉLÉMENT DE RECOUVREMENT DE JOINTS POUR UN RESSORT À LAME

(30) Priorität: 05.10.2018 AT 508642018
(43) Veröffentlichungstag der Anmeldung: 08.04.2020
(73) Patentinhaber: Hendrickson Commercial Vehicle Systems Europe GmbH, 8750 Judenburg (AT)
(72) Erfinder: ZAMBERGER, Jörg, 8753 Fohnsdorf (AT)
(74) Vertreter: Beer & Partner Patentanwälte KG

(56) Entgegenhaltungen:
- JP-U- H0 335 333
- US-A- 1 560 115
- US-A1- 2010 127 444

## Beschreibung

Die Erfindung betrifft ein Fugenabdeckelement für eine Blattfeder aus Federstahl, insbesondere Trapezfeder, Parabelfeder oder Lenkerfeder mit einem Federblatt oder mehreren Federblättern, zur Verwendung in einer Radaufhängung eines Fahrzeuges, wobei die Blattfeder wenigstens ein gerolltes Auge mit einer inneren Mantelfläche, einer äußeren Mantelfläche, zwei seitlichen Ringflächen und einer Stirnseite aufweist, wobei zwischen der Stirnseite und der Oberfläche des der Stirnseite zugeordneten Teils der Blattfeder eine Fuge besteht, wobei das Fugenabdeckelement einen Basisabschnitt und einen Abdeckabschnitt, der sich von dem Basisabschnitt weg erstreckt und die Fuge an der Innenseite des Auges abdeckt, aufweist, wobei der Abdeckabschnitt zwei entlang eines Scheitels ineinander übergehende Schenkel aufweist, die eine der inneren Mantelfläche des gerollten Auges im Wesentlichen folgende Außenfläche bilden und wobei an der Außenfläche des Abdeckabschnittes dem Scheitel im Wesentlichen folgend wenigstens ein Vorsprung angeordnet ist, der in Einbauzustand in die Fuge eingreift.

Zudem betrifft die Erfindung eine Blattfeder mit einem Fugenabdeckelement und ein Verfahren zum Ausstatten eines gerollten Auges einer Blattfeder mit einer Stahl-Gummi-Lagerbuchse.

Die Verwendung von Blattfedern aus Federstahl bei einer Radaufhängung eines Fahrzeuges ist bekannt. Solche Blattfedern können wenigstens ein gerolltes Auge aufweisen, das im Regelfall ein Mittel zum Verbinden der Blattfeder mit dem Fahrgestell des Fahrzeuges ist. In dem gerollten Auge ist hierfür eine Lagerbuchse angeordnet. Das gerollte Auge weist fertigungsbedingt eine Fuge auf, die an der Innenseite des gerollten Auges eine scharfe Kante bildet.

Bekannt sind Stahl-Gummi-Stahl-Lagerbuchsen und Stahl-Gummi-Kunststoff-Lagerbuchsen, die eine innere Stahlhülse, eine äußere Stahl- oder Kunststoffhülse einen dazwischen angeordneten Gummikörper aufweisen. Nachteilig dabei ist, dass solche Lagerbuchsen teuer sind und das Risiko besteht, dass die äußere Hülse an der inneren Mantelfläche des (Stahl-) Auges nicht richtig anliegt, was ein Sicherheitsrisiko ist oder zumindest zu einer Beeinträchtigung der Funktion der Lagerbuchse führt.

Bekannt sind zudem Stahl-Gummi-Lagerbuchsen, die eine innere Stahlhülse und einen darum angeordneten Gummikörper, aber keine äußere Stahl- oder Kunststoffhülse mehr aufweisen. Diese Lagerbuchsen vermeiden die Nachteile der äußeren Stahlhülse von Stahl-Gummi-Stahl-Lagerbuchsen, d.h. sie sind günstiger in der Fertigung und liegen an der inneren Mantelfläche des (Stahl-) Auges grundsätzlich richtig an. Allerdings besteht der besondere Nachteil, dass die an der Innenseite des gerollten Auges gebildete scharfe Kante der Fuge den Gummikörper beim Einbringen der Lagerbuchse in das gerollte Auge und/oder im späteren Einsatzzustand derart beschädigt, dass die Lagerbuchse (zum Teil direkt nach dem Einbringen in das gerollte Auge) ausgewechselt werden muss oder zumindest die Lebensdauer der Lagerbuchse reduziert ist. Dieser Nachteil wiederum stellt ein Sicherheitsrisiko dar und erhöht die Kosten einer Blattfeder/einer Radaufhängung.

Um zu vermeiden, dass der Gummikörper beim Einbringen der Lagerbuchse oder im späteren Einsatzzustand durch die scharfe Kante der Fuge beschädigt wird, ist es aus der EP 1 309 462 B1 bekannt, die Fuge durch ein Abdeckelement abzudecken. Das Abdeckelement hat einen im Wesentlichen steifen und ebenen Basisabschnitt und einen im Wesentlichen steifen Abdeckabschnitt. Der Basisabschnitt liegt außerhalb des Auges an der seitlichen Ringfläche des gerollten Auges an und hat Anschlagteile, um eine Verdrehung des Abdeckelements zu verhindern. Der Abdeckabschnitt hat zwei zueinander abgewinkelte Schenkel, die die Fuge im gerollten Auge quer zur Längserstreckung der Blattfeder abdecken. Das Abdeckelement wird an der Fuge verdrehsicher angebracht und anschließend wird die Lagerbuchse eingebracht. Nach dem Einbringen der Lagerbuchse steht der Basisteil seitlich des gerollten Auges ab.

Die mit dem Abdeckelement zusammenwirkende Lagerbuchse gemäß EP 1 309 462 B1 weist eine aufwändige Geometrie mit seitlichen Flanschen auf. Die Fertigung dieser Lagerbuchse ist immer noch mit hohen Kosten verbunden, wobei insbesondere die seitlichen Flansche das Einbringen der Lagerbuchse erschweren.

Es sind Stahl-Gummi-Lagerbuchsen bekannt, die einen einfachen, rollenförmigen, geometrischen Aufbau haben. Diese Lagerbuchsen sind zum einen kostengünstiger in der Fertigung und können zum anderen einfacher in das gerollte Auge eingebracht werden. Es hat sich jedoch gezeigt, dass solche Lagerbuchsen mit einem im Wesentlichen rollenförmigen Gummikörper nicht mehr mit dem Abdeckelement gemäß EP 1 309 462 B1 zusammenpassen, da dann der nach außen abstehende Basisabschnitt des Abdeckteils beim Anordnen der fertig montierten Blattfeder in eine bestehende Federstütze Probleme bereitet.

Dies ist insbesondere deshalb problematisch, da der Basisabschnitt nicht einfach weggelassen werden kann, da er wesentliche Funktionen erfüllt. Er erhöht die Lebensdauer der Lagerbuchse, indem er beim Einbringen der Lagerbuchse in das gerollte Auge und auch im späteren Einsatzzustand während des Fahrbetriebs als Verdrehsicherung für den Abdeckabschnitt dient, wodurch sichergestellt wird, dass der Abdeckabschnitt nicht verrutscht und der Gummikörper der Lagerbuchse nicht in Kontakt mit der scharfen Kante der Fuge kommt.

Der Gummikörper ist im Regelfall aus einem Elastomer gebildet.

Ein gattungsgemäßes Fugenabdeckelement ist aus US 1,560,115 A bekannt.

Der Erfindung liegt die Aufgabe zu Grunde, ein Fugenabdeckelement für eine Blattfeder aus Federstahl sowie eine Blattfeder aus Federstahl mit einem Fugenabdeckelement zur Verfügung zu stellen, mit dem die zuvor genannten Nachteile vermieden werden. Insbesondere ist es Aufgabe der Erfindung, sicherzustellen, dass eine einfache und kostengünstig zu fertigende Stahl-Gummi-Lagerbuchse in ein gerolltes Auge einer Blattfeder einpressbar ist, ohne dass der Gummikörper der Lagerbuchse während und nach dem Einpressen mit der scharfen Kante der durch das gerollte Auge gebildeten Fuge in Kontakt kommt, und dass die Blattfeder mit dem gerollten Auge in eine bestehende Federstütze angeordnet werden kann, ohne dass ein seitlich vom gerollten Auge abstehender Teil im Wege steht.

Gelöst wird diese Aufgabe mit einem Fugenabdeckelement, das die Merkmale des Anspruches 1 aufweist.

Zudem wird diese Aufgabe mit einer Blattfeder, die die Merkmale des Anspruches 11 aufweist, gelöst.

Bevorzugte und vorteilhafte Ausführungsformen der Erfindung sind Gegenstand der Unteransprüche.

Im Rahmen der Erfindung ist vorgesehen, dass an der Außenfläche des Abdeckabschnittes dem Scheitel im Wesentlichen folgend wenigstens ein Vorsprung angeordnet ist, der im Einbauzustand in die Fuge eingreift. Der Vorsprung wird in die Fuge eingesteckt und übernimmt dabei die Funktion der Verdrehsicherung für den Abdeckabschnitt, d.h. er verhindert, dass der Abdeckabschnitt entlang der inneren Mantelfläche des gerollten Auges verrutscht und der Gummikörper der Lagerbuchse mit der scharfen Kante der Fuge in Kontakt kommt. Da erfindungsgemäß vorgesehen ist, dass der Basisabschnitt eine Anschlagfläche für eine seitliche Ringfläche bildet, wird während des Einbringens bzw. Einpressens der Stahl-Gummi-Lagerbuchse das Fugenabdeckelement zusätzlich durch den Basisabschnitt gegen ein Verrutschen in axialer Richtung des Auges gesichert. Die Lagerbuchse wird von der Seite her in das gerollte Auge eingepresst, an welcher sich der Basisabschnitt befindet. Nach dem Einbringen bzw. Einpressen der Stahl-Gummi-Lagerbuchse kann der Basisabschnitt entfernt werden, um zu verhindern, dass ein Teil des Fugenabdeckelementes seitlich absteht. Dies ist dadurch möglich, da der Vorsprung nach dem Einbringen bzw. Einpressen der Stahl-Gummi-Lagerbuchse die Funktion der Verdrehsicherung für den Abdeckabschnitt übernimmt.

Damit wird erreicht, dass eine kostengünstig zu fertigende Stahl-Gummi-Lagerbuchse in ein gerolltes Auge einer Blattfeder aus Federstahl einpressbar ist, ohne dass der Gummikörper durch die scharfe Kante der Fuge des gerollten Auges beim Einpressen der Lagerbuchse beschädigt wird. Zudem wird verhindert, dass der Gummikörper der Lagerbuchse im späteren Einsatzzustand der Blattfeder in die Fuge geraten kann. Weiters wird erreicht, dass die Blattfeder mit den bestehenden Abmessungen des Auges in eine Federstütze anordenbar ist.

Um den Basisabschnitt nach dem Einpressen der Lagerbuchse möglichst einfach entfernen zu können, ist erfindungsgemäß vorgesehen, dass am Übergang vom Abdeck- zum Basisabschnitt eine Sollbruchstelle vorgesehen ist.

In einer bevorzugten Ausführungsform ist die Sollbruchstelle eine Perforation oder eine Materialverjüngung.

Im Rahmen der Erfindung kann vorgesehen sein, dass der Vorsprung eine mit dem Abdeckabschnitt verbundene Seite und eine gegenüberliegende, freie Seite, die im Einbauzustand in der Fuge angeordnet ist, aufweist und dass sich die mit dem Abdeckabschnitt verbundene Seite im Wesentlichen über die Länge des Abdeckabschnittes erstreckt. Bei dieser Ausführungsform ist ein einziger Vorsprung vorgesehen.

In einer vorteilhaften Weiterbildung dieser Ausführungsform kann vorgesehen sein, dass sich auch das freie Ende des Vorsprungs im Wesentlichen über die Länge des Abdeckabschnittes erstreckt. In Draufsicht auf den Vorsprung hat dieser dann eine rechteckige oder trapezförmige Grundfläche. Diese Ausführungsform ist vorteilhaft, da so sichergestellt ist, dass der Abdeckabschnitt im Wesentlichen über die gesamte Länge der scharfen Kante in die Fuge eingreift. Insbesondere eine trapezförmige Grundfläche kann vorteilhaft sein, wenn die freie Seite des Vorsprunges kürzer ist, als die mit dem Abdeckabschnitt verbundene Seite, da somit gewährleistet ist, dass kein Teil des Fugenabdeckelementes seitlich des gerollten Auges absteht.

Alternativ dazu kann vorgesehen sein, dass zwei oder mehr als zwei Vorsprünge vorgesehen sind, die sich gemeinsam vorzugsweise über die Länge des Abdeckabschnitte erstrecken.

Die freie/n Seite/n des Vorsprunges/der Vorsprünge kann/können durchwegs geradlinig verlaufen oder einen anderen Verlauf haben.

Im Rahmen der Erfindung kann vorgesehen sein, dass die beiden Schenkel des Abdeckabschnittes gekrümmt sind und einen Kreisbogen mit dem Scheitel bilden oder dass die beiden Schenkel des Abdeckabschnittes jeweils im Wesentlichen in einer Ebene verlaufen, wobei die beiden Ebenen im Scheitel in einem Winkel zueinander angeordnet sind. Auch eine Kombination aus einem geraden und einem gekrümmten Schenkel ist im Rahmen der Erfindung denkbar. Wesentlich ist, dass die Schenkel eine der inneren Mantelfläche des gerollten Auges im Wesentlichen folgende Außenfläche bilden.

In einer fertigungstechnisch vorteilhaften Ausführungsform ist vorgesehen, dass der Basisabschnitt, der Abdeckabschnitt und der wenigstens eine Vorsprung Teil einer einstückigen Struktur sind. Im Rahmen der Erfindung ist es bevorzugt, wenn der Basisabschnitt, der Abdeckabschnitt und der wenigstens eine Vorsprung aus Polymer bestehen.

Darüber hinaus kann das erfindungsgemäße Fugenabdeckelement wie das Fugenabdeckelement gemäß EP 1 309 462 B1 aufgebaut sein. Insbesondere kann vorgesehen sein, dass der Basisabschnitt im Wesentlichen planar ist und sich der Abdeckabschnitt in eine im Wesentlichen normal auf den Basisabschnitt stehende Richtung erstreckt.

Insbesondere kann vorgesehen sein, dass vom Basisabschnitt wenigstens ein Anschlagteil, vorzugsweise zwei Anschlagteile, vorzugsweise normal zum Basisabschnitt in Richtung zum Abdeckabschnitt hin absteht. Ein Anschlagteil kann eine stiftähnliche Struktur haben, die im Einsatzzustand an der äußeren Mantelfläche des gerollten Auges im Bereich der Fuge anliegt. Ein alternativ oder zusätzlich dazu vorgesehener Anschlagteil kann eine gegebenenfalls gekrümmte Anschlagfläche bilden, die im Einsatzzustand an der dem gerollten Auge gegenüberliegenden Seite des entsprechenden Teils der Blattfeder, insbesondere an der Unterseite eines Federblattes, anliegt.

Alternativ dazu kann auch vorgesehen sein, dass der Basisabschnitt ohne in Richtung zum Abdeckabschnitt hin abstehende Anschlagteile ausgeführt ist. Diese Ausführungsform ist besonders kostengünstig herstellbar, erfüllt jedoch trotzdem sämtliche wesentlichen Funktionen des Fugenabdeckelements. Beim Einpressen der Lagerbuchse wirkt der Basisabschnitt gegen ein axiales Verrutschen des Abdeckabschnittes, wobei der erfindungsgemäß am Abdeckabschnitt vorgesehene Vorsprung ein Verrutschen des Abdeckabschnittes entlang der inneren Mantelfläche des gerollten Auges verhindert. Bei dieser Ausführungsform kann der Basisabschnitt nur durch einen im Wesentlichen planaren Teil, der eine Anschlagfläche für eine seitliche Ringfläche des gerollten Auges bildet, gebildet sein.

Im Rahmen der Erfindung kann vorgesehen sein, dass der Basisabschnitt (mit oder ohne in Richtung zum Abdeckabschnitt weisenden Anschlagteilen) einen in Richtung vom Abdeckabschnitt weg weisenden Vorsprung aufweist, der beispielsweise platten- oder stift- oder T-förmig ist. Dieser Vorsprung erleichtert das Entfernen des Basisabschnitts vom Abdeckabschnitt.

Im Rahmen der Erfindung kann das gerollte Auge Teil eines Federblattes oder einer Röllchenlage sein. Die Erfindung ist jedoch generell bei gerollten Augen von Blattfedern anwendbar.

Im Rahmen der Erfindung ist es bevorzugt, wenn die Länge des Abdeckabschnittes im Wesentlichen der Länge der Fuge entspricht. Im Rahmen der Erfindung kann das gerollte Auge auf der im Einbauzustand oberen Seite ("aufgerolltes Auge") des entsprechenden Teils der Blattfeder oder auf der im Einbauzustand unteren Seite ("abgerolltes Auge") verlaufen. Im Rahmen der Erfindung sind auch sogenannte "Berliner-Augen" denkbar.

Die Erfindung wird anhand eines Ausführungsbeispiels gemäß den Zeichnungen näher erläutert. Es zeigt:
- Fig. 1: eine erste Ausführungsform eines erfindungsgemäßen Fugenabdeckelements vor dem Einbau in ein gerolltes Auge einer Blattfeder,
- Fig. 2: eine zweite Ausführungsform eines erfindungsgemäßen Fugenabdeckelements vor dem Einbau in ein gerolltes Auge einer Blattfeder,
- Fig. 3: eine dritte Ausführungsform eines erfindungsgemäßen Fugenabdeckelements vor dem Einbau in ein gerolltes Auge einer Blattfeder und
- Fig. 4: ein gerolltes Auge eines Federblattes einer erfindungsgemäßen Blattfeder mit einem erfindungsgemäßen Fugenabdeckelement im Einsatzzustand.

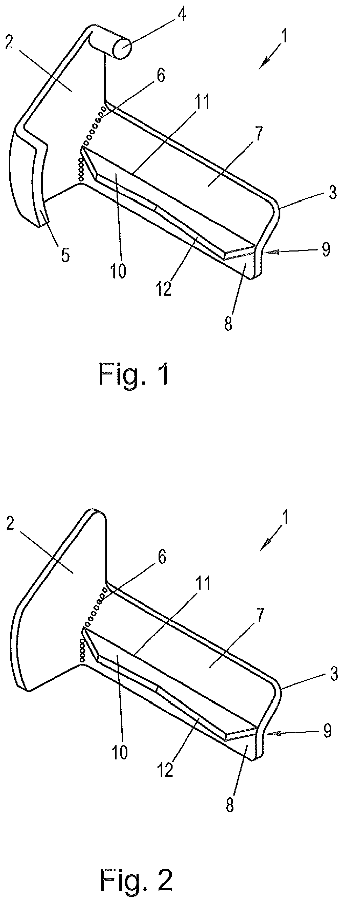

In Fig. 1 ist ein Fugenabdeckelement 1 mit einem Basisabschnitt 2 und einem Abdeckabschnitt 3 dargestellt. Der Basisabschnitt 2 ist im Wesentlichen planar und weist zwei Anschlagteile in Form eines Stiftes 4 und einer gekrümmten Anschlagfläche 5 auf. Der Basisabschnitt 2 ist über eine Sollbruchstelle 6 mit dem Abdeckabschnitt 3 verbunden. An der Sollbruchstelle 6 kann der Basisabschnitt 2 vom Abdeckabschnitt 3 entfernt werden.

Der Abdeckabschnitt 3 hat zwei Schenkel 7, 8, die entlang eines Scheitels 9 ineinander übergehen. Entlang des Scheitels 9 ist ein stegartiger Vorsprung 10 angeordnet. Der Vorsprung 10 hat eine mit dem Abdeckabschnitt 3 verbundene Seite 11 und eine gegenüberliegende, freie Seite 12. Die Länge der mit dem Abdeckabschnitt 3 verbundenen Seite 11 entspricht der Länge des Abdeckabschnittes 3. Die freie Seite 12 ist etwas kürzer. Obwohl in Fig. 1 die freie Seite 12 abgewinkelt dargestellt ist, kann die freie Seite 12 auch durchgehend geradlinig verlaufen.

In Fig. 2 ist ein Fugenabdeckelement 1 dargestellt, das ähnlich aufgebaut ist, wie das Fugenabdeckelement 1 gemäß Fig. 1. Der Unterschied liegt darin, dass gemäß Fig. 2 die Anschlagteile in Form eines Stiftes 4 und einer Anschlagfläche 5 nicht mehr vorgesehen sind. Der Basisabschnitt 2 ist auf der dem Abdeckabschnitt 3 zugewandten Seite anschlagteilfrei und durchgehend planar ausgeführt.

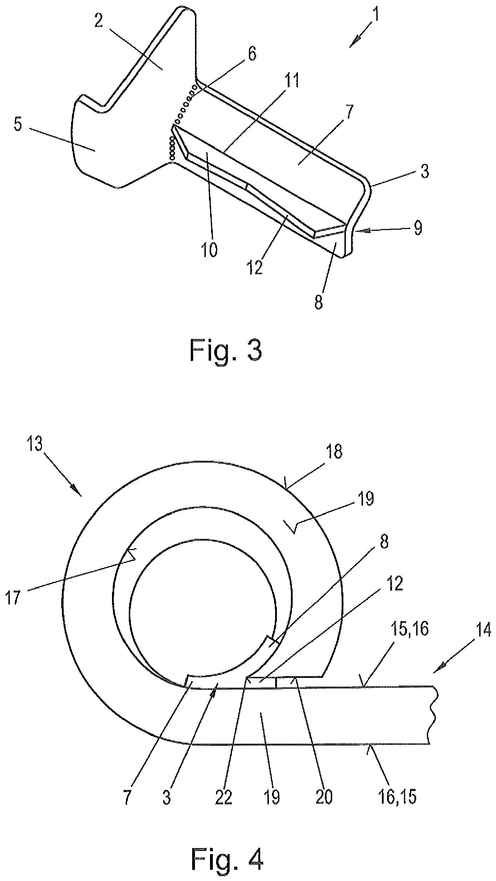

Gemäß Fig. 3 weist der Basisabschnitt 2 wiederum keine in Richtung zum Abdeckabschnitt hin weisenden Anschlagteile auf. Die in Fig. 1 dargestellte Anschlagfläche 5 wurde um 180° versetzt angeordnet und bildet nun einen in Richtung vom Abdeckabschnitt 3 weg weisenden Vorsprung 5, an dem zum Entfernen des Basisabschnittes 2 vom Abdeckabschnitt 3 einfach gezogen werden kann.

In Fig. 4 ist ein im Wesentlichen kreisrundes, gerolltes Auge 13 eines Federblattes 14 in einer Seitenansicht dargestellt. Das Federblatt 14 weist eine Oberseite 15 und eine Unterseite 16 auf. Das gerollte Auge 13 kann zur Oberseite 15 (aufgerolltes Auge) oder zur Unterseite 16 (abgerolltes Auge) hin ausgelenkt sein und weist eine innere Mantelfläche 17, eine äußere Mantelfläche 18, zwei seitliche Ringflächen 19 und eine Stirnseite 20 auf, wobei zwischen der Stirnseite 20 und dem zugeordneten Teil der Oberseite 15 des Federblattes 14 eine Fuge 21 besteht. Die Fuge 21 bildet an der inneren Mantelfläche 17 eine scharfe Kante 22.

Um zu vermeiden, dass die scharfe Kante 22 den Gummikörper einer in das gerollte Auge 13 einzubringenden Stahl-Gummi-Lagerbuchse beschädigt, werden das Fugenabdeckelement 1 und die Lagerbuchse wie folgt im gerollten Auge 13 angeordnet:
Das Fugenabdeckelement 1 wird mit dem dem Basisabschnitt 2 gegenüberliegenden, freien Ende derart in das gerollte Auge 13 eingeschoben, dass der Vorsprung 10 vorzugsweise über die gesamte Länge der Fuge 21 in die Fuge 21 eingreift und die Außenseite der beiden Schenkel 7, 8 des Abdeckabschnittes an der der Fuge 21 benachbarten inneren Mantelfläche 17 des gerollten Auges 13 anliegt. Der planare Abschnitt des Basisteils 2 liegt dann mit seiner dem Abdeckabschnitt 3 zuweisenden Fläche an einer seitlichen Ringfläche 19 des gerollten Auges 13 im Bereich der Fuge 21 an und verhindert somit, dass das Fugenabdeckelement 1 beim späteren Einpressen der Lagerbuchse aus dem gerollten Auge 13 herausgedrückt wird. Sofern vorhanden, umgreift die Anschlagfläche 5 dabei das Federblatt 14 und liegt an der Unterseite 16 bzw. der Oberseite 15 des Federblattes 14 an.

Sofern vorhanden, liegt der Stift 4 an der äußeren Mantelfläche 18 des gerollten Auges 13 im Bereich der Fuge 21 an.

Nachdem das Fugenabdeckelement 1 in das gerollte Auge 13 eingebracht ist, wird die Stahl-Gummi-Lagerbuchse von der Seite her in das gerollte Auge eingepresst, an welcher sich der Basisabschnitt befindet. In diesem Zustand liegt der Basisabschnitt 2 noch seitlich am gerollten Auge an, was an sich dazu führt, dass das spätere Anbringen des gerollten Auges 13 in eine Federstütze problematisch ist. Um dieses Problem zu vermeiden, wird der Basisabschnitt 2 vor dem Anbringen des Auges 13 in eine Federstütze entlang der Sollbruchstelle 6 vom Abdeckabschnitt 3 abgetrennt. In Folge steht kein Teil mehr seitlich vom gerollten Auge 13 ab, wobei es durch den in die Fuge 21 eingreifenden Vorsprung 10 trotzdem gewährleistet ist, dass der Abdeckabschnitt 3 gegen Verdrehung gesichert ist.

Zusammenfassend kann ein Ausführungsbeispiel der Erfindung wie folgt beschrieben werden:
Eine Blattfeder aus Federstahl zur Verwendung in einer Radaufhängung eines Fahrzeuges hat wenigstens ein gerolltes Auge 13 mit einer inneren Mantelfläche 17, einer äußeren Mantelfläche 18, zwei seitlichen Ringflächen 19 und einer Stirnseite 20, wobei zwischen der Stirnseite 20 und der Oberfläche des der Stirnseite 20 zugeordneten Teils der Blattfeder eine Fuge 21 besteht. Ein Fugenabdeckelement 1 hat einen Basisabschnitt 2, der eine Anschlagfläche für eine seitliche Ringfläche 19 bildet, und einen Abdeckabschnitt 3, der sich von dem Basisabschnitt 2 weg erstreckt und die Fuge 21 an der Innenseite des gerollten Auges 13 abdeckt. Der Abdeckabschnitt 3 hat zwei an einem Scheitel 9 ineinander übergehende Schenkel 7, 8, die eine der inneren Mantelfläche 17 des gerollten Auges 13 im Wesentlichen folgende Außenfläche bilden. An der Außenfläche des Abdeckabschnittes 3 ist dem Scheitel 9 im Wesentlichen folgend wenigstens ein Vorsprung 10 angeordnet, der in Einbauzustand in die Fuge 21 eingreift.

## Patentansprüche

1. Fugenabdeckelement für eine Blattfeder aus Federstahl, insbesondere Trapezfeder, Parabelfeder oder Lenkerfeder mit einem Federblatt oder mehreren Federblättern, zur Verwendung in einer Radaufhängung eines Fahrzeuges, wobei die Blattfeder wenigstens ein gerolltes Auge (13) mit einer inneren Mantelfläche (17), einer äußeren Mantelfläche (18), zwei seitlichen Ringflächen (19) und einer Stirnseite (20) aufweist, wobei zwischen der Stirnseite (20) und der Oberfläche des der Stirnseite (20) zugeordneten Teils der Blattfeder eine Fuge (21) besteht, wobei das Fugenabdeckelement (1) einen Basisabschnitt (2) und einen Abdeckabschnitt (3), der sich von dem Basisabschnitt (2) weg erstreckt und die Fuge (21) an der Innenseite des gerollten Auges (13) abdecken kann, aufweist, wobei der Abdeckabschnitt (3) zwei entlang eines Scheitels (9) ineinander übergehende Schenkel (7, 8) aufweist, die eine Außenfläche bilden die der inneren Mantelfläche (17) des gerollten Auges (13) im Wesentlichen folgen kann, und wobei an der Außenfläche des Abdeckabschnittes (3) dem Scheitel (9) im Wesentlichen folgend wenigstens ein Vorsprung (10) angeordnet ist, der in Einbauzustand in die Fuge (21) eingreifen kann, **dadurch gekennzeichnet, dass** der Basisabschnitt (2) eine Anschlagfläche für eine seitliche Ringfläche (19) bildet und dass am Übergang vom Abdeckabschnitt (3) zum Basisabschnitt (2) eine Sollbruchstelle (6) vorgesehen ist.

2. Fugenabdeckelement nach Anspruch 1, **dadurch gekennzeichnet, dass** die Sollbruchstelle (6) eine Perforation oder eine Materialverjüngung ist.

3. Fugenabdeckelement nach Anspruch 1 oder 2, **dadurch gekennzeichnet, dass** der Vorsprung (10) eine mit dem Abdeckabschnitt (3) verbundene Seite (11) und eine gegenüberliegende, freie Seite (12), die im Einbauzustand in der Fuge (21) anordenbar ist, aufweist, dass sich die mit dem Abdeckabschnitt (3) verbundene Seite (11) im Wesentlichen über die Länge des Abdeckabschnittes (3) erstreckt, insbesondere dass sich die freie Seite (12) des Vorsprungs (10) im Wesentlichen über die Länge des Abdeckabschnittes (3) erstreckt, und/oder dass der Vorsprung (10) eine rechteckige oder trapezförmige Grundfläche hat, insbesondere dass die freie Seite (12) des Vorsprunges (10) kürzer ist als die mit dem Abdeckabschnitt (3) verbundene Seite (11).

4. Fugenabdeckelement nach Anspruch 1 oder 2, **dadurch gekennzeichnet, dass** zwei oder mehr als zwei Vorsprünge (10) vorgesehen sind, die sich gemeinsam vorzugsweise über die Länge des Abdeckabschnittes (3) erstrecken.

5. Fugenabdeckelement nach einem der Ansprüche 1 bis 4, **dadurch gekennzeichnet, dass** die beiden Schenkel (7, 8) des Abdeckabschnittes gekrümmt sind und einen Kreisbogen mit dem Scheitel (9) bilden oder dass die beiden Schenkel (7, 8) des Abdeckabschnittes (3) jeweils im Wesentlichen in einer Ebene verlaufen, wobei die beiden Ebenen am Scheitel (9) in einem Winkel zueinander angeordnet sind.

6. Fugenabdeckelement nach einem der Ansprüche 1 bis 5, **dadurch gekennzeichnet, dass** der Basisabschnitt (2) und der Abdeckabschnitt (3) und der wenigstens eine Vorsprung (10) Teil einer einstückigen Struktur sind.

7. Fugenabdeckelement nach einem der Ansprüche 1 bis 6, **dadurch gekennzeichnet, dass** der Basisabschnitt (2) und der Abdeckabschnitt (3) und der wenigstens eine Vorsprung (10) aus Polymer bestehen.

8. Fugenabdeckelement nach einem der Ansprüche 1 bis 7, **dadurch gekennzeichnet, dass** der Basisabschnitt (2) im Wesentlichen planar ist und sich der Abdeckabschnitt (3) in eine im Wesentlichen normal auf den Basisabschnitt (2) stehende Richtung erstreckt, wobei vorzugsweise der Basisabschnitt (2) wenigstens einen in Richtung zum Abdeckabschnitt (3) hin weisenden Anschlagteil (4, 5) aufweist, insbesondere einen vorzugsweise stiftförmigen Anschlagteil (4), der an der äußeren Mantelfläche (18) des gerollten Auges (13) im Bereich der Fuge (21) anliegen kann, und/oder einen vorzugsweise flächigen Anschlagteil (5), der im Einsatzzustand an der dem gerollten Auge (13) gegenüberliegenden Seite des entsprechenden Teils der Blattfeder, insbesondere an der Unterseite (16) eines Federblattes (14), anliegen kann, oder der Basisabschnitt (2) an der dem Abdeckabschnitt (3) zugewandten Seite durchgehend im Wesentlichen planar und anschlagteilfrei ist.

9. Fugenabdeckelement nach Anspruch 8, **dadurch gekennzeichnet, dass** der Basisabschnitt (2) einen in Richtung vom Abdeckabschnitt (3) weg weisenden Vorsprung aufweist, der beispielsweise platten- oder stift- oder T-förmig ist.

10. Blattfeder aus Federstahl, insbesondere Trapezfeder, Parabelfeder oder Lenkerfeder mit einem Federblatt oder mehreren Federblättern, zur Verwendung in einer Radaufhängung eines Fahrzeuges, wobei die Blattfeder wenigstens ein vorzugsweise einteilig mit dem Federblatt gebildetes, gerolltes Auge (13) mit einer inneren Mantelfläche (17), einer äußeren Mantelfläche (18), zwei seitlichen Ringflächen (19) und einer Stirnseite (20) aufweist, wobei zwischen der Stirnseite (20) und der Oberfläche des der Stirnseite zugeordneten Teils der Blattfeder eine Fuge (21) besteht, und wobei die Blattfeder ein Fugenabdeckelement (1) zum Abdecken der Fuge (21) an der Innenseite des gerollten Auges (13) aufweist, **dadurch gekennzeichnet, dass** das Fugenabdeckelement (1) gemäß einem der Ansprüche 1 bis 9 gebildet ist.

11. Blattfeder nach Anspruch 10, **dadurch gekennzeichnet, dass** sie wenigstens ein Federblatt (14) aus Federstahl mit zwei Endbereichen aufweist, wobei das gerollte Auge (13) als Mittel zum Verbinden der Blattfeder mit dem Fahrgestell eines Fahrzeuges an wenigstens einem Endbereich des Federblattes (14) vorgesehen ist und vorzugsweise ein aufgerolltes Auge oder ein abgerolltes Auge oder ein Berliner-Auge ist.

12. Blattfeder nach Anspruch 10 oder 11, **dadurch gekennzeichnet, dass** sie wenigstens eine Röllchenlage aus Federstahl mit zwei Endbereichen aufweist, wobei das gerollte Auge (13) an wenigstens einem Endbereich der Röllchenlage vorgesehen, und insbesondere einteilig mit der Röllchenlage gebildet, ist.

13. Blattfeder nach einem der Ansprüche 10 bis 12, **dadurch gekennzeichnet, dass** die Länge des Abdeckabschnittes (3) im Wesentlichen der Länge der Fuge (21) entspricht.

14. Blattfeder nach einem der Ansprüche 10 bis 13, **dadurch gekennzeichnet, dass** in das gerollte Auge (13) mit eingebrachtem Fugenabdeckelement (1) eine Stahl-Gummi-Lagerbuchse eingepresst ist.

15. Verfahren zum Ausstatten eines gerollten Auges (13) einer Blattfeder mit einer Stahl-Gummi-Lagerbuchse, wobei die Blattfeder eine Blattfeder aus Federstahl, insbesondere Trapezfeder, Parabelfeder oder Lenkerfeder mit einem Federblatt oder mehreren Federblättern, zur Verwendung in einer Radaufhängung eines Fahrzeuges ist, wobei die Blattfeder wenigstens ein gerolltes Auge (13) mit einer inneren Mantelfläche (17), einer äußeren Mantelfläche (18), zwei seitlichen Ringflächen (19) und einer Stirnseite (20) aufweist, und wobei zwischen der Stirnseite (20) und der Oberfläche des der Stirnseite (20) zugeordneten Teils der Blattfeder eine Fuge (21) besteht, **gekennzeichnet durch** die folgenden Schritte:
a) Einschieben eines Fugenabdeckelementes (1) nach einem der Ansprüche 1 bis 9 in das gerollte Auge (13) der Blattfeder, sodass der Vorsprung (10) des Abdeckabschnittes (3) des Fugenabdeckelementes (1) in der Fuge (21) aufgenommen ist, die Außenseite der beiden Schenkel (7, 8) des Fugenabdeckelementes (1) an der inneren Mantelfläche (17) des gerollten Auges (13) anliegen und der Basisabschnitt (2) des Fugenabdeckelementes (1) an einer der seitlichen Ringflächen (19) anschlägt,
b) Einpressen der Stahl-Gummi-Lagerbuchse in das gerollte Auge (13), von der Seite her, an welcher sich der Basisabschnitt (2) befindet, und
c) vorzugsweise Abtrennen des Basisabschnittes (2) entlang der Sollbruchstelle (6).

## Claims

1. Joint cover element for a leaf spring made of spring steel, in particular a trapezoidal spring, parabolic spring or trailing arm spring having one spring leaf or a plurality of spring leaves, for use in a wheel suspension of a vehicle, wherein the leaf spring has at least one rolled eye (13) with an inner lateral surface (17), an outer lateral surface (18), two lateral annular surfaces (19) and an end face (20), wherein a joint (21) exists between the end face (20) and the surface of the part of the leaf spring associated with the end face (20), wherein the joint cover element (1) comprises a base section (2) and a cover section (3) which extends away from the base section (2) and can cover the joint (21) on the inside of the rolled eye (13), wherein the cover section (3) has two legs (7, 8) merging into each other along an apex (9) and forming an outer surface which can substantially follow the inner lateral surface (17) of the rolled eye (13), and wherein at least one projection (10) substantially following the apex (9) is arranged on the outer surface of the cover section (3), which, in the installed state, can engage in the joint (21), **characterized in that** the base section (2) forms a stop surface for a lateral annular surface (19), and **in that** a predetermined breaking point (6) is provided at the transition from the cover section (3) to the base section (2) .

2. Joint cover element according to claim 1, **characterized in that** the predetermined breaking point (6) is a perforation or a material taper.

3. Joint cover element according to claim 1 or 2, **characterized in that** the projection (10) has a side (11) connected to the cover section (3) and an opposite, free side (12) which can be arranged in the joint (21) in the installed state, **in that** the side (11) connected to the cover section (3) extends substantially over the length of the cover section (3), in particular **in that** the free side (12) of the projection (10) extends substantially over the length of the cover section (3), and/or **in that** the projection (10) has a rectangular or trapezoidal surface area, in particular **in that** the free side (12) of the projection (10) is shorter than the side (11) connected to the cover section (3).

4. Joint cover element according to claim 1 or 2, **characterized in that** two or more than two projections (10) are provided, which together preferably extend over the length of the cover section (3).

5. Joint cover element according to one of claims 1 to 4, **characterized in that** the two legs (7, 8) of the cover section are curved and form an arc of a circle with the apex (9), or **in that** the two legs (7, 8) of the cover section (3) each extend substantially in one plane, wherein the two planes are arranged at an angle to one another at the apex (9).

6. Joint cover element according to one of claims 1 to 5, **characterized in that** the base section (2) and the cover section (3) and the at least one projection (10) are part of an integral structure.

7. Joint cover element according to one of claims 1 to 6, **characterized in that** the base section (2) and the cover section (3) and the at least one projection (10) are made of polymer.

8. Joint cover element according to one of claims 1 to 7, **characterized in that** the base section (2) is substantially planar and the cover section (3) extends in a direction substantially normal to the base section (2), wherein preferably the base section (2) has at least one stop part (4, 5) facing in the direction of the cover section (3), in particular a preferably pin-shaped stop part (4) which can rest against the outer lateral surface (18) of the rolled eye (13) in the region of the joint (21), and/or a preferably planar stop part (5) which, in the use state, can rest against that side of the corresponding part of the leaf spring which is opposite the rolled eye (13), in particular against the underside (16) of a spring leaf (14), or the base section (2) is substantially planar throughout and free of stop parts on the side facing the cover section (3).

9. Joint cover element according to claim 8, **characterized in that** the base section (2) has a projection facing away from the cover section (3), which projection is plate-shaped or pin-shaped or T-shaped, for example.

10. Leaf spring made of spring steel, in particular a trapezoidal spring, parabolic spring or trailing arm spring having one spring leaf or a plurality of spring leaves, for use in a wheel suspension of a vehicle, wherein the leaf spring has at least one rolled eye (13) which is preferably formed integrally with the spring leaf and has an inner lateral surface (17), an outer lateral surface (18), two lateral annular surfaces (19) and an end face (20), wherein a joint (21) exists between the end face (20) and the surface of the part of the leaf spring associated with the end face, and wherein the leaf spring has a joint cover element (1) for covering the joint (21) on the inside of the rolled eye (13), **characterized in that** the joint cover element (1) is formed according to one of claims 1 to 9.

11. Leaf spring according to claim 10, **characterized in that** it comprises at least one spring leaf (14) made of spring steel having two end portions, wherein the rolled eye (13) is provided as a means for connecting the leaf spring to the chassis of a vehicle at at least one end portion of the spring leaf (14) and is preferably a rolled-up eye or an unrolled eye or a Berliner eye.

12. Leaf spring according to claim 10 or 11, **characterized in that** it comprises at least one roll layer made of spring steel having two end portions, wherein the rolled eye (13) is provided at at least one end portion of the roll layer, and is formed in particular integrally with the roll layer.

13. Leaf spring according to one of claims 10 to 12, **characterized in that** the length of the cover section (3) substantially corresponds to the length of the joint (21).

14. Leaf spring according to one of claims 10 to 13, **characterized in that** a steel-rubber bearing bush is pressed into the rolled eye (13) with inserted joint cover element (1).

15. Method for equipping a rolled eye (13) of a leaf spring with a steel-rubber bearing bush, wherein the leaf spring is a leaf spring made of spring steel, in particular a trapezoidal spring, parabolic spring or trailing arm spring having one spring leaf or a plurality of spring leaves, for use in a wheel suspension of a vehicle, wherein the leaf spring has at least one rolled eye (13) having an inner lateral surface (17), an outer lateral surface (18), two lateral annular surfaces (19) and an end face (20), and wherein a joint (21) exists between the end face (20) and the surface of the part of the leaf spring associated with the end face (20), **characterized by** the following steps:
a) inserting a joint cover element (1) according to one of claims 1 to 9 into the rolled eye (13) of the leaf spring, so that the projection (10) of the cover section (3) of the joint cover element (1) is accommodated in the joint (21), the outer surface of the two legs (7, 8) of the joint cover element (1) rest against the inner lateral surface (17) of the rolled eye (13), and the base section (2) of the joint cover element (1) abuts one of the lateral annular surfaces (19),
b) pressing the steel-rubber bearing bush into the rolled eye (13), from the side on which the base section (2) is located, and
c) preferably severing the base section (2) along the predetermined breaking point (6).

## Revendications

1. Élément couvre-joint pour un ressort à lames en acier à ressorts, en particulier un ressort à section trapézoïdale, un ressort parabolique ou un ressort à bras de renvoi avec une ou plusieurs lames de ressort, à utiliser dans une suspension de roue d'un véhicule, lequel ressort à lames présente au moins un nœud roulé (13) avec une surface d'enveloppe intérieure (17), une surface d'enveloppe extérieure (18), deux surfaces latérales annulaires (19) et une face frontale (20), un joint (21) étant formé entre la face frontale (20) et la surface de la partie du ressort à lames tournée vers la surface de la face frontale (20), l'élément couvre-joint (1) présentant une partie de base (2) et une partie de couverture (3) qui s'éloigne de la partie de base (2) et peut couvrir le joint (21) sur la face intérieure du nœud roulé (13), la partie de couverture (3) présentant deux bras (7, 8) qui se font suite le long d'une ligne de sommet (9) et qui forment une surface extérieure qui peut suivre pour l'essentiel la surface d'enveloppe intérieure (17) du nœud roulé (13), et au moins une saillie (10) qui peut se mettre en prise dans le joint (21) dans l'état monté étant disposée sur la surface extérieure de la partie de couverture (3) en suivant pour l'essentiel la ligne de sommet (9), **caractérisé en ce que** la partie de base (2) présente une surface de butée pour une surface latérale annulaire (19) et **en ce qu'**un point de cassure (6) est prévu à la transition entre la partie de couverture (3) et la partie de base (2).

2. Élément couvre-joint selon la revendication 1, **caractérisé en ce que** le point de cassure (6) est une perforation ou un amincissement du matériau.

3. Élément couvre-joint selon la revendication 1 ou 2, **caractérisé en ce que** la saillie (10) présente une face (11) reliée à la partie de couverture (3) et une face libre (12) qui lui fait face et qui peut être disposée dans le joint (21) dans l'état monté, **en ce que** la face (11) reliée à la partie de couverture (3) s'étend pour l'essentiel sur la longueur de la partie de couverture (3), en particulier **en ce que** la face libre (12) de la saillie (10) s'étend pour l'essentiel sur la longueur de la partie de couverture (3) et/ou **en ce que** la saillie (10) a une forme de base rectangulaire ou trapézoïdale, en particulier **en ce que** la face libre (12) de la saillie (10) est plus courte que la face (11) reliée à la partie de couverture (3).

4. Élément couvre-joint selon la revendication 1 ou 2, **caractérisé en ce que** sont prévues deux ou plus de deux saillies (10) qui s'étendent de préférence ensemble sur la longueur de la partie de couverture (3).

5. Élément couvre-joint selon l'une des revendications 1 à 4, **caractérisé en ce que** les deux bras (7, 8) de la partie de couverture sont courbés et forment un arc de cercle avec la ligne de sommet (9) ou **en ce que** les deux bras (7, 8) de la partie de couverture (3) s'étendent chacun pour l'essentiel dans un plan, les deux plans étant disposés en formant un angle l'un avec l'autre au niveau de la ligne de sommet (9).

6. Élément couvre-joint selon l'une des revendications 1 à 5, **caractérisé en ce que** la partie de base (2) et la partie de couverture (3) et l'au moins une saillie (10) font partie d'une structure d'une seule pièce.

7. Élément couvre-joint selon l'une des revendications 1 à 6, **caractérisé en ce que** la partie de base (2) et la partie de couverture (3) et l'au moins une saillie (10) se composent de polymère.

8. Élément couvre-joint selon l'une des revendications 1 à 7, **caractérisé en ce que** la partie de base (2) est sensiblement plane et la partie de couverture (3) s'étend dans une direction sensiblement perpendiculaire à la partie de base (2), la partie de base (2) présentant de préférence au moins une partie de butée (4, 5) orientée en direction de la partie de couverture (3), en particulier une partie de butée (4) de préférence en forme de goupille, qui peut reposer sur la surface d'enveloppe extérieure (18) du nœud roulé (13) au niveau du joint (21), et/ou présente une partie de butée (5) de préférence plate qui peut reposer, dans l'état de service, sur le côté opposé au nœud roulé (13) de la partie correspondante du ressort à lames, en particulier sur la face inférieure (16) d'une lame de ressort (14), ou la partie de base (2) est sensiblement plane et sans butée sur tout son côté tourné vers la partie de couverture (3).

9. Élément couvre-joint selon la revendication 8, **caractérisé en ce que** la partie de base (2) présente une saillie qui s'écarte de la partie de couverture (3) et qui est, par exemple, en forme de plaque ou de goupille ou deT.

10. Ressort à lames en acier à ressorts, en particulier ressort à section trapézoïdale, ressort parabolique ou ressort à bras de renvoi avec une ou plusieurs lames de ressort, à utiliser dans une suspension de roue d'un véhicule, lequel ressort à lames présente au moins un nœud roulé (13), de préférence formé d'un seul tenant avec la lame de ressort, avec une surface d'enveloppe intérieure (17), une surface d'enveloppe extérieure (18), deux surfaces latérales annulaires (19) et une face frontale (20), un joint (21) étant formé entre la face frontale (20) et la surface de la partie du ressort à lames associée à la face frontale et le ressort à lames comportant un élément couvre-joint (1) pour couvrir le joint (21) sur la face intérieure du nœud roulé (13), **caractérisé en ce que** l'élément couvre-joint (1) est conformé selon l'une des revendications 1 à 9.

11. Ressort à lames selon la revendication 10, **caractérisé en ce qu'**il comporte au moins une lame de ressort (14) en acier à ressorts avec deux zones d'extrémité, le nœud roulé (13) étant prévu pour servir de moyen pour assembler le ressort à lames au châssis d'un véhicule dans au moins une zone d'extrémité de la lame de ressort (14) et étant de préférence un nœud saillant ou un nœud renversé ou un nœud berlinois.

12. Ressort à lames selon la revendication 10 ou 11, **caractérisé en ce qu'**il comporte au moins une couche roulée en acier à ressorts avec deux zones d'extrémité, le nœud roulé (13) étant prévu sur au moins une zone d'extrémité de la couche roulée et formé en particulier d'un seul tenant avec la couche roulée.

13. Ressort à lames selon l'une des revendications 10 à 12, **caractérisé en ce que** la longueur de la partie de couverture (3) est sensiblement égale à la longueur du joint (21).

14. Ressort à lames selon l'une des revendications 10 à 13, **caractérisé en ce qu'**un coussinet de palier en acier et caoutchouc est enfoncé dans le nœud roulé (13) avec l'élément couvre-joint (1) en place.

15. Procédé pour équiper un nœud roulé (13) d'un ressort à lames avec un coussinet de palier en acier et caoutchouc, dans lequel le ressort à lames est un ressort à lames en acier à ressorts, en particulier un ressort à section trapézoïdale, un ressort parabolique ou un ressort à bras de renvoi avec une lame de ressort ou plusieurs lames de ressort, destiné à être utilisé dans une suspension de roue d'un véhicule à moteur, dans lequel le ressort à lames comprend au moins un nœud roulé (13) avec une surface d'enveloppe intérieure (17), une surface d'enveloppe extérieure (18), deux surfaces latérales annulaires (19) et une face frontale (20) et dans lequel un joint (21) est formé entre la face frontale (20) et la surface de la partie du ressort à lames associé à la face frontale (20), **caractérisé en ce qu'**il comprend les étapes suivantes :
a) insertion d'un élément couvre-joint (1) selon l'une des revendications 1 à 9 dans le nœud roulé (13) du ressort à lames, de telle manière que la saillie (10) de la partie de couverture (3) de l'élément couvre-joint (1) soit logée dans le joint (21), la face extérieure des deux bras (7, 8) de l'élément couvre-joint (1) repose sur la surface d'enveloppe intérieure (17) du nœud roulé (13) et la partie de base (2) de l'élément couvre-joint (1) repose sur une des surfaces latérales annulaires (19),
b) calage du coussinet de palier en acier et caoutchouc dans le nœud roulé (13) par le côté sur lequel se trouve la partie de base (2) et
c) de préférence, séparation de la partie de base (2) le long du point de cassure (6).
